# FASCICULE DE BREVET EUROPEEN

(11) **EP 1 045 129 B1**
(45) Date de publication et mention de la délivrance du brevet: **04.08.2004**
(21) Numéro de dépôt: 00401025.2
(22) Date de dépôt: 13.04.2000
(51) Int. Cl.: F02K 1/00, F02K 1/12, F02K 1/15

(54) **Tuyère d'éjection axisymétrique convergente divergente et orientable**
Allseitig schwenkbare konvergente - divergente Schubdüse
Axisymmetric vectoriable convergent - divergent nozzle

(30) Priorité: 15.04.1999 FR 9904709
(43) Date de publication de la demande: 18.10.2000
(73) Titulaire: Snecma Moteurs, 75015 Paris (FR)
(72) Inventeur: Feder, Didier Georges, 77176 Savigny le Temple (FR); Lapergue, Guy Jean-Louis, 77950 Rubelles (FR); Monville, Bertrand Pierre Renaud, 77550 Moissy Cramayel (FR); Salperwyck, Laurent Claude Patrick, 77650 Lizines (FR)

(56) Documents cités:
- EP-A- 0 060 763
- EP-A- 0 503 963
- EP-A- 0 557 229
- WO-A-92/03649
- FR-A- 1 025 827
- GB-A- 1 306 588
- US-A- 4 984 741
- US-A- 5 239 815

## Description

L'invention concerne une tuyère d'éjection de turboréacteur axisymétrique, convergente divergente, et dont la partie divergente est orientable.

Elle concerne plus précisément une tuyère d'éjection de turboréacteur axisymétrique, convergente divergente, comportant, en aval d'un conduit d'éjection d'axe X, une première couronne de volets convergents articulés à l'extrémité aval du conduit d'éjection et actionnés par des premiers moyens de commande, et, en aval de la première couronne de volets, une deuxième couronne de volets divergents dont les extrémités amont sont articulées sur les extrémités aval des volets convergents correspondants et dont les extrémités aval sont reliées par des bielles à un anneau de pivotement coopérant avec une partie sphérique solidaire d'une structure fixe, ledit anneau de pivotement étant actionné par des deuxièmes moyens de commande afin de permettre une déviation du jet des gaz d'éjection.

Ces tuyères axisymétriques orientables offrent aux avions de combat une agilité supplémentaire et une meilleure manoeuvrabilité en tangage et lacet.

US 5 150 839 et US 5 511 376 dévoilent des tuyères dans lesquelles les parois sphériques sont fixes par rapport au conduit d'éjection.

Dans US 5 150 839, l'anneau du pivotement est disposé à l'intérieur de la paroi sphérique et il est maintenu en appui contre la surface interne de la sphère par l'intermédiaire de galets, grâce aux forces de pression exercées sur les volets divergents par le jet des gaz d'éjection.

Dans US 5 511 376, l'anneau de pivotement entoure la partie sphérique et comporte une surface interne cylindrique, ce qui permet une translation axiale de l'anneau ou son pivotement sous l'action de vérins.

La tuyère selon la présente invention est caractérisée par le fait que l'anneau de pivotement est monté rotulant sur la paroi externe de la partie sphérique afin de garantir le centrage dudit anneau autour de ladite partie sphérique.

Il est en outre prévu un système d'antirotation empêchant la rotation de l'anneau de pivotement autour de l'axe X. Avantageusement, ce système d'antirotation comporte au moins un galet d'axe radial porté par l'anneau de pivotement et coopérant avec les parois latérales d'une lumière ménagée dans la partie sphérique et ayant un plan de symétrie contenant l'axe X.

Afin de permettre une variation de la section de sortie de la couronne de volets divergents, la partie sphérique est avantageusement montée sur la structure fixe, de manière à pouvoir coulisser parallèlement à l'axe X, suite à un déplacement axial de l'anneau de pivotement sous l'action des deuxièmes moyens de commande. La partie sphérique est de préférence portée par une pluralité de pattes fixées à la structure fixe et s'étendant parallèlement à l'axe X. La partie sphérique entoure les pattes et comporte une pluralité de galets de guidage coopérant avec des lumières ménagées dans les pattes.

D'autres avantages et caractéristiques de l'invention ressortiront à la lecture de la description suivante faite à titre d'exemple et en référence aux dessins annexés dans lesquels :
la figure 1 est une coupe de l'arrière corps d'un turboréacteur selon un plan contenant l'axe de rotation de la turbine, cet arrière corps étant équipé d'une tuyère axisymétrique convergente divergente orientable conforme à l'invention ;
la figure 2 est semblable à la figure 1 et montre la tuyère dans la position ouverte, orientée vers le haut ;
la figure 3 est semblable à la figure 1 et montre la tuyère dans la position fermée, orientée vers le haut ;
la figure 4 est une coupe selon un plan contenant l'axe de rotation de la turbine, d'une variante de réalisation de la tuyère axisymétrique, convergente divergente orientable selon l'invention ;
la figure 5 est semblable à la figure 4 et montre la tuyère dans la position fermée orientée vers le haut ;
la figure 6 est une coupe, selon un plan contenant l'axe de la turbine, de la tuyère des figures 1 à 3, qui montre, à plus grande échelle, le système d'antirotation de l'anneau de pivotement ;

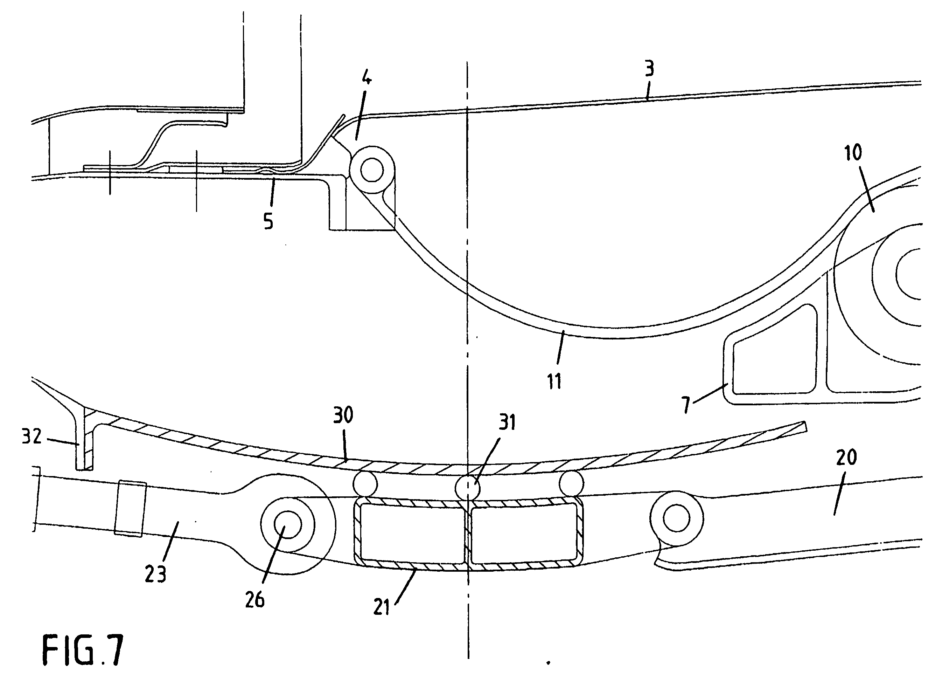

la figure 7 est une coupe selon un plan contenant l'axe de la turbine, de la tuyère des figures 1 à 3, qui montre, à plus grande échelle, le système de centrage et de roulement de l'anneau de pivotement sur la partie sphérique ; et
la figure 8 est une coupe, selon un plan contenant l'axe de la turbine, de la tuyère selon les figures 4 et 5, qui montre, à plus grande échelle, la liaison glissière de la partie sphérique sur une patte de guidage.

Sur les dessins on a représenté par la référence 1 un canal de post-combustion d'un turboréacteur dont l'axe X est confondu avec l'axe de rotation de la turbine. Ce canal de post-combustion 1 de forme annulaire entoure une chemise de protection thermique 2 et constitue une partie de la structure fixe de l'arrière corps du turboréacteur.

Une première couronne de volets convergents 3, constituée d'une pluralité de volets convergents commandés et d'une pluralité de volets convergents suiveurs intercalés entre les volets convergents commandés, est disposée dans le prolongement du canal de post-combustion 1. Les volets convergents 3 sont articulés à leur extrémité amont 4 sur l'extrémité aval 5 du canal de post-combustion 1. La section de sortie A8 de la couronne de volets convergents 3 est régulée par l'intermédiaire d'un système de vérins 6 ancrés en amont sur la face externe du canal de post-combustion 1 et reliés à un anneau de commande 7 par une liaison rotulante 8. A l'anneau de commande 7 sont fixés, par des axes 9, des galets 10 qui s'appuient respectivement sur des cames 11 prévues sur les faces externes des volets convergents commandés 3. Des bielles 12 interposées entre les cylindres des vérins 6 et une structure fixe 13 entourant l'extrémité aval 5 du canal de post-combustion 1 servent à compenser une partie de l'effort de poussée exercée par les tiges 14 des vérins 6.

La sortie et la rétraction des tiges 14 des vérins 6 entraînent une translation de l'anneau de commande 7 parallèlement à l'axe X et une modification de la section A8.

Une deuxième couronne de volets divergents 15 est disposée en aval de la section A8. Cette deuxième couronne de volets comporte une pluralité de volets divergents commandés dans le prolongement des volets convergents commandés et une pluralité de volets divergents suiveurs intercalés entre les volets divergents commandés. Chaque volet divergent 15 est articulé à son extrémité amont 16 sur l'extrémité aval 17 du volet convergent 3 correspondant, de manière à pouvoir pivoter autour d'un axe 18, et à son extrémité aval 19 sur l'extrémité aval d'une bielle 20, elle-même reliée à un anneau de pivotement 21 entourant la structure fixe 13. Les bielles 20 peuvent être intégrées à des volets froids 22 qui constituent le profil aérodynamique externe de la tuyère.

L'anneau de pivotement 21 est relié aux tiges 23 d'une pluralité de vérins 24 ancrés en amont sur la face externe du canal de post-combustion 1 par des liaisons rotulantes 25. Les liaisons 26 entre les tiges 23 des vérins 24 et l'anneau de pivotement sont également rotulantes.

La structure fixe 13, solidaire du canal de post-combustion 1, porte une partie annulaire sphérique 30 d'axe X, entourant les volets convergents 3 et l'anneau de commande 9, sur laquelle l'anneau de pivotement 21 est monté rotulant par un système de roulement ou de glissement adéquat 31, des patins à billes par exemple, afin de garantir la centrage de l'anneau de pivotement 21 par rapport au centre O de la partie sphérique 30.

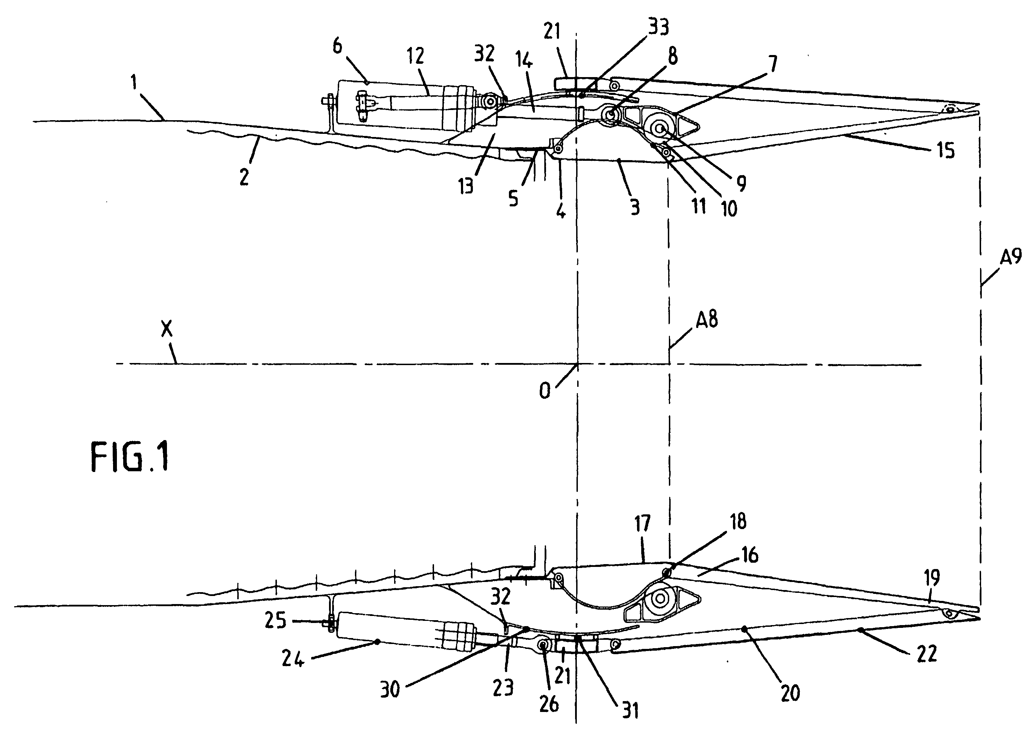

Selon un premier mode de réalisation montré sur les figures 1 à 3, la partie sphérique 30 est fixée sur une bride 32 de la structure fixe 13.

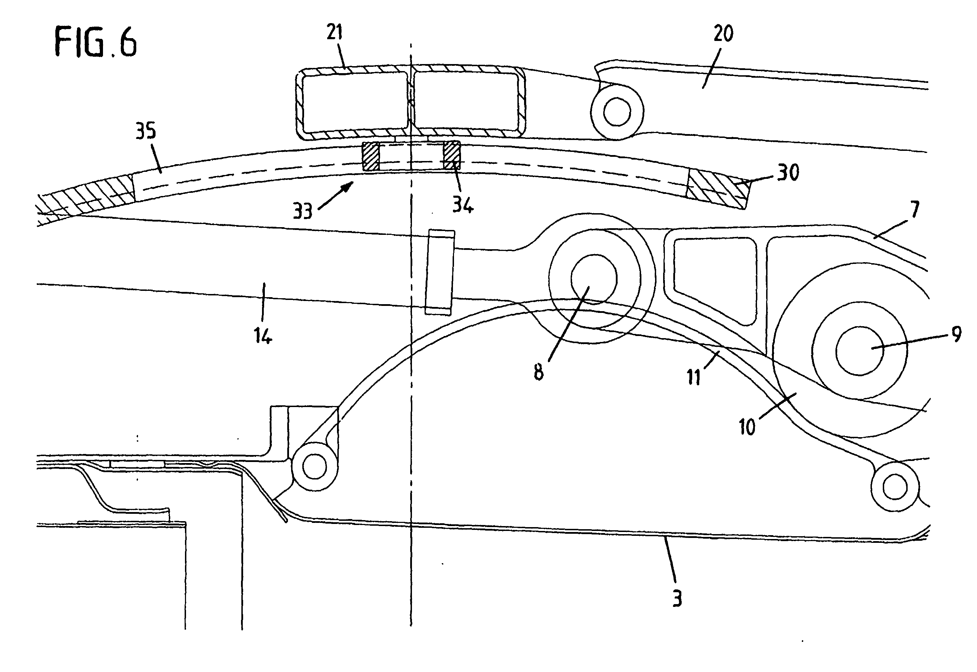

Afin d'empêcher la rotation de l'anneau de pivotement 21 autour de l'axe X, il est prévu un système d'antirotation 33, compatible avec le glissement de l'anneau de pivotement 21 en tangage et lacet autour de la partie sphérique 30. A cet effet, ainsi que cela est montré sur la figure 6, l'anneau de pivotement 21 comporte au moins un galet 34, d'axe radial, qui peut coulisser dans une lumière 35 ménagée dans la paroi de la partie sphérique 30 et symétrique par rapport à un plan contenant l'axe X. De préférence, l'anneau de pivotement 21 comporte deux galets 34, diamétralement opposés.

Les vérins 24 commandant le pivotement de l'anneau de pivotement 21 autour du centre O de la partie sphérique 30 sont disposés de manière à permettre le basculement de l'anneau de pivotement sur la partie sphérique 30. Ces vérins 24 peuvent être au nombre de deux et décalés de 90°, l'un de l'autre autour de l'axe X. Un déplacement identique ou différent des deux vérins provoquera un basculement de l'anneau de pivotement 21 autour du centre O, du fait que l'anneau 21 est monté rotulant sur la partie sphérique 30. Le système d'antirotation 33 empêche en outre la rotation de l'anneau de pivotement autour de l'axe X.

Le basculement de l'anneau de pivotement 21 entraîne une déviation du jet des gaz d'éjection et une modification de la section de sortie A9 de la tuyère divergente.

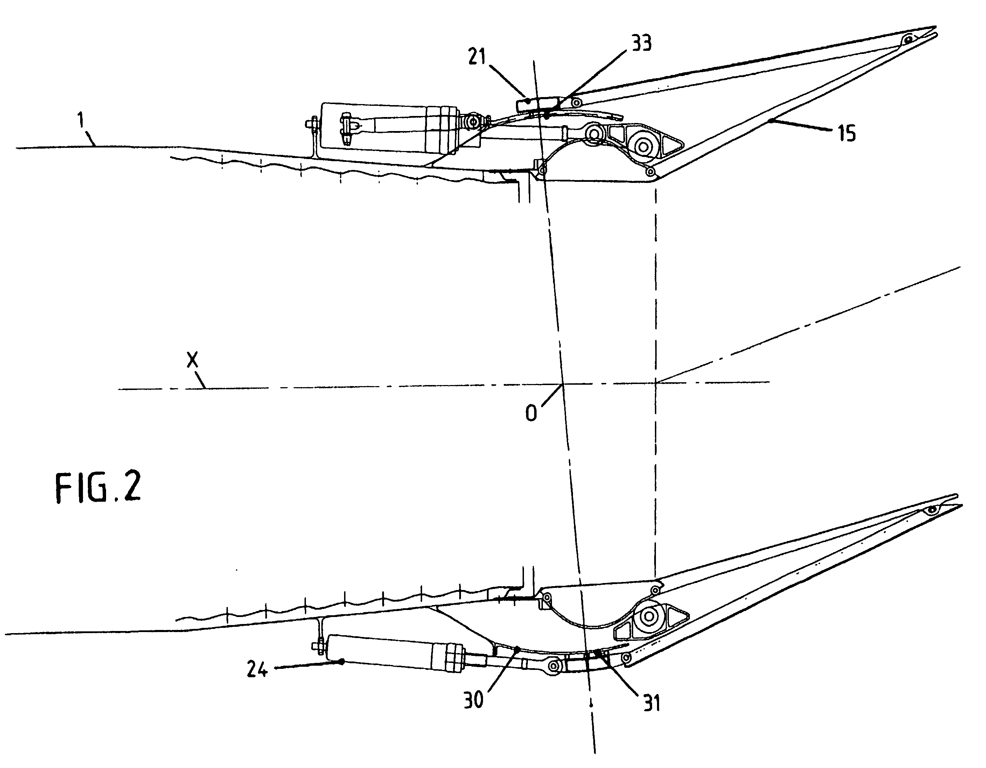

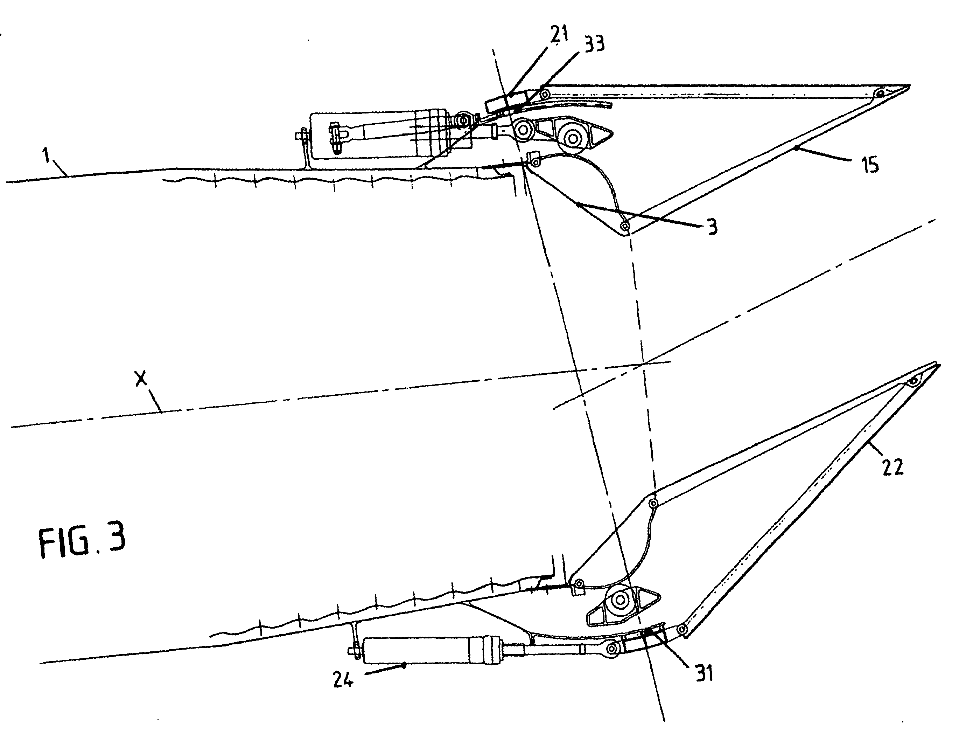

La combinaison du déplacement axial de l'anneau de commande 7 et du basculement de l'anneau de pivotement 21 permet de modifier la configuration de la tuyère convergente divergente. La figure 1 montre ainsi la tuyère décrite ci-dessus dans la configuration ouverte non orientée, la figure 2 la montre dans la configuration ouverte orientée et la figure 3 la montre dans la configuration fermée orientée.

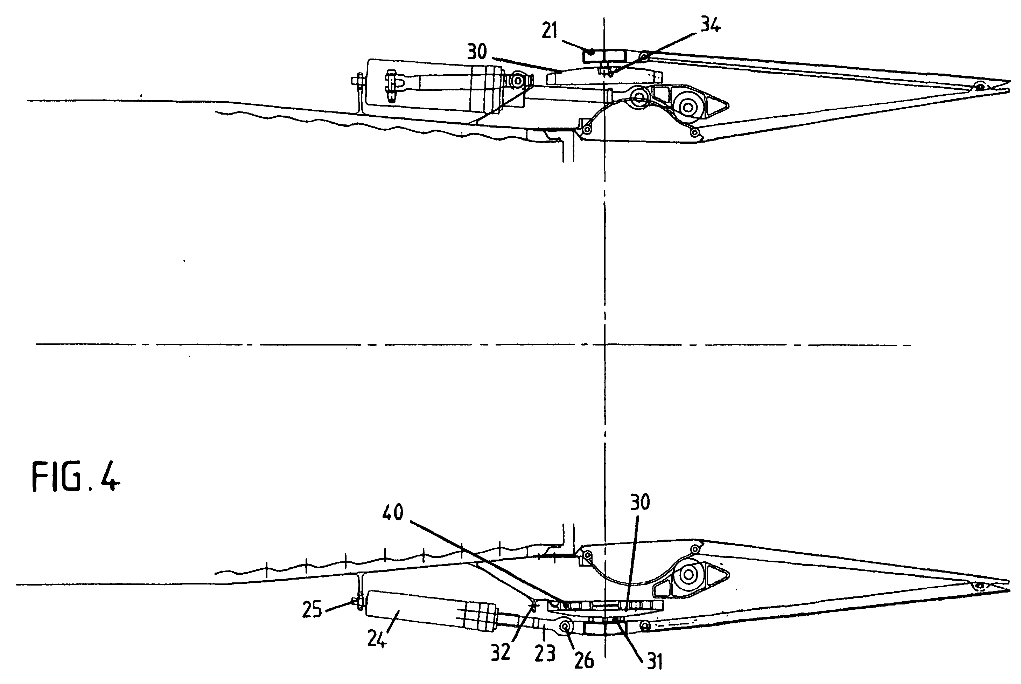

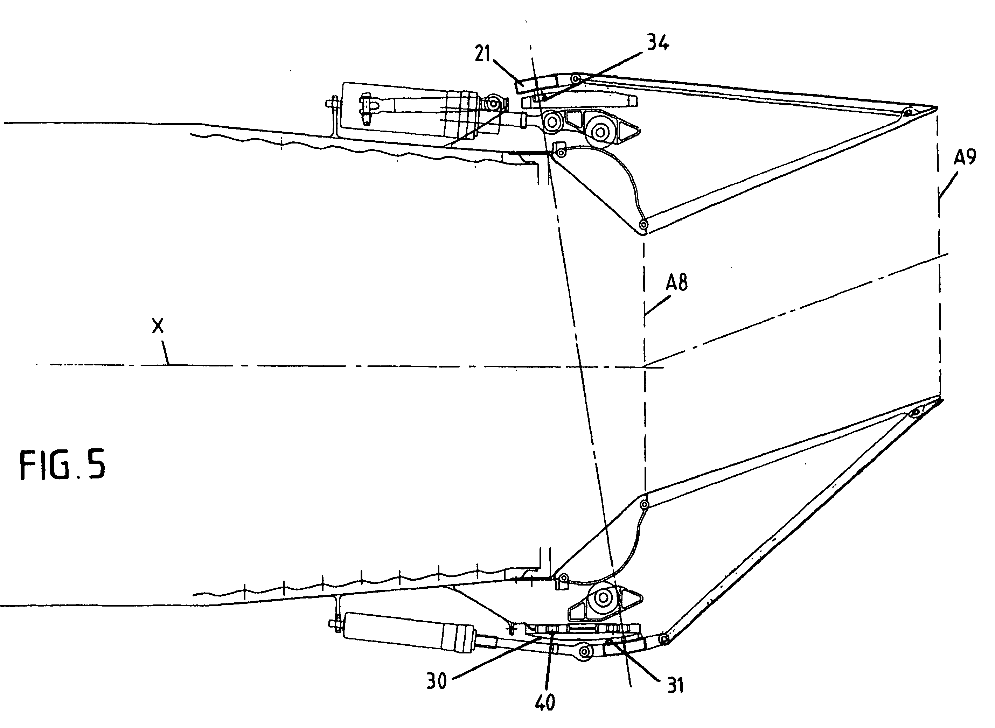

Selon une variante de réalisation, montrée sur les figures 4, 5 et 8, la partie sphérique 30 est portée par la structure fixe 13, de telle manière qu'elle puisse coulisser par rapport à la structure fixe 13, parallèlement à l'axe X, suite à un déplacement axial de l'anneau de pivotement 21 sous l'action du déplacement dans le même sens des tiges 23 des vérins de commande 24. Dans cette variante de réalisation, les vérins de commande 24 sont au moins au nombre de trois espacés angulairement de 120° autour de l'axe X.

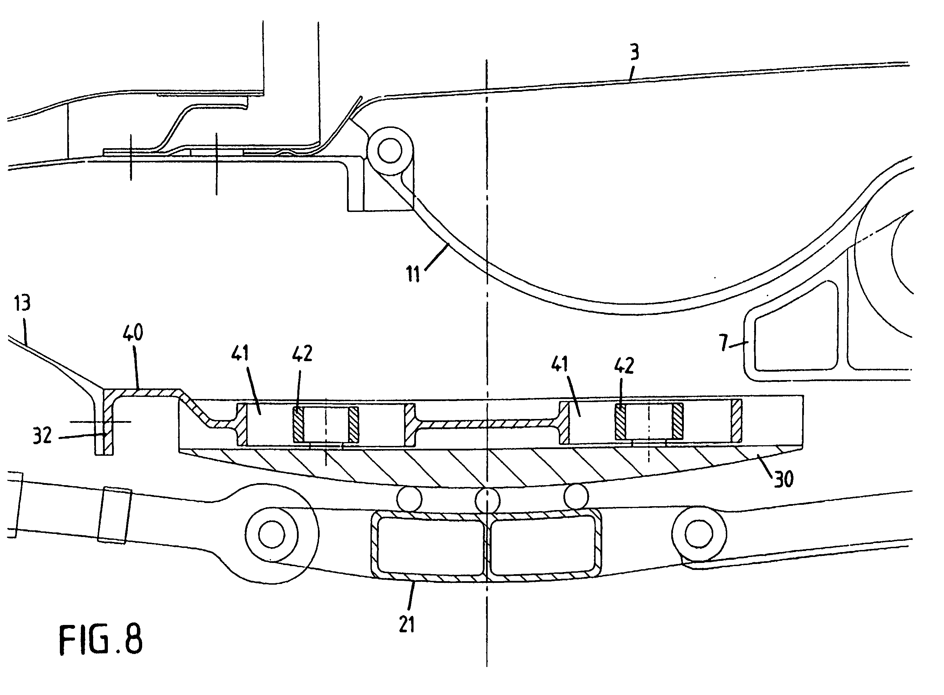

La structure fixe 13 comporte un nombre suffisant de pattes 4 qui s'étendent parallèlement à l'axe X, fixées en amont à la bride 32 et réparties autour de l'axe X. Chaque patte 40 comporte une ou plusieurs lumières 41 qui s'étendent dans des plans parallèles à l'axe X et contenant éventuellement l'axe X, et dans lesquelles peuvent coulisser des galets 42 rattachés à la partie sphérique 30. La figure 8 montre un exemple de liaisons glissière entre la partie sphérique 30 et une patte de support 40.

Cette disposition particulière permet de modifier, dans une certaine mesure, la section A9 de la tuyère divergente pour une section A8 donnée, et quelle que soit son orientation.

Le système d'antirotation 33 de la partie sphérique 30 autour de l'axe X, montré sur la figure 6, peut également être installé sur la partie sphérique 30 montée coulissante sur les pattes 40.

## Revendications

1. Tuyère d'éjection de turboréacteur axisymétrique, convergente divergente, comportant, en aval d'un conduit d'éjection (1) d'axe X, une première couronne de volets convergents (3) articulés à l'extrémité aval du conduit d'éjection (1) et actionnés par des premiers moyens de commande (6, 7, 14), et, en aval de la première couronne de volets, une deuxième couronne de volets divergents (15) dont les extrémités amont (16) sont articulées sur les extrémités aval (17) des volets convergents (3) correspondants et dont les extrémités aval (19) sont reliées par des bielles (20) à un anneau de pivotement (21) coopérant avec une partie sphérique (30) solidaire d'une structure fixe (13), ledit anneau de pivotement (21) étant actionné par des deuxièmes moyens de commande (24) afin de permettre une déviation du jet des gaz d'éjection, **caractérisée par le fait que** l'anneau de pivotement (21) est monté rotulant sur la paroi externe de la partie sphérique (30) afin de garantir le centrage dudit anneau autour de ladite partie sphérique.

2. Tuyère selon la revendication 1, **caractérisée par le fait qu'**il est prévu en outre un système d'antirotation (33) empêchant la rotation de l'anneau de pivotement (21) autour de l'axe X.

3. Tuyère selon la revendication 2, **caractérisée par le fait que** le système d'antirotation (33) comporte au moins un galet (34) d'axe radial porté par l'anneau de pivotement (21) et coopérant avec les parois latérales d'une lumière (35) ménagée dans la partie sphérique (30) et ayant un plan de symétrie radial contenant l'axe X.

4. Tuyère selon l'une quelconque des revendications 1 à 3, **caractérisée par le fait que** la partie sphérique (30) est montée sur la structure fixe (13) de manière à pouvoir coulisser parallèlement à l'axe X suite à un déplacement axial de l'anneau de pivotement (21) sous l'action des deuxièmes moyens de commande (24).

5. Tuyère selon la revendication 4, **caractérisée par le fait que** la partie sphérique (30) est portée par une pluralité de pattes (40) fixées à la structure fixe (13) et s'étendant parallèlement à l'axe X.

6. Tuyère selon la revendication 5, **caractérisée par le fait que** la partie sphérique (30) entoure les pattes (40) et comporte une pluralité de galets de guidage (42) coopérant avec des lumières (41) ménagées dans les pattes (40).

7. Tuyère selon l'une quelconque des revendications 1 à 6, **caractérisée par le fait que** les deuxièmes moyens de commande (24) comportent au moins trois vérins.

8. Tuyère selon l'une quelconque des revendications 1 à 7, **caractérisée par le fait que** les premiers moyens de commande comportent un anneau de commande (7) d'axe X disposé à l'intérieur de la partie sphérique (30) et comportant une pluralité de galets (10) appuyant sur des cames (11) liées respectivement aux volets convergents (3).

## Patentansprüche

1. Achsensymmetrische konvergente-divergente Schubdüse für Turbotriebwerke, die hinter einer Schubleitung (1) mit der Achse X einen ersten Kranz von konvergenten Klappen (3) aufweist, die am hinteren Ende der Schubleitung (1) angelenkt sind und durch erste Steuermittel (6, 7, 14) betätigt werden, und hinter dem ersten Kranz von Klappen einen zweiten Kranz von divergenten Klappen (15) aufweist, die mit ihrem vorderen Ende (16) an den hinteren Enden (17) der entsprechenden konvergenten Klappen (3) angelenkt sind und deren hintere Enden (19) durch Stangen (20) mit einem Schwenkring (21) verbunden sind, der mit einem kugelförmigen Teil (30) zusammenwirkt, welches fest mit einem festen Aufbau (13) verbunden ist, wobei dieser Schwenkring (21) durch zweite Steuermittel (24) betätigt wird, um eine Umlenkung des Strahls der Schubgase zu ermöglichen,
**dadurch gekennzeichnet,**
**dass** der Schwenkring (21) allseitig drehbar an der Außenwand des kugelförmigen Teils (30) angebracht ist, um das Zentrieren dieses Rings um diesen kugelförmigen Teil zu gewährleisten.

2. Schubdüse nach Anspruch 1,
**dadurch gekennzeichnet,**
**dass** sie ferner mit einem Drehsperr-System (33) versehen ist, das die Drehbewegung des Schwenkrings (21) um die Achse X verhindert.

3. Schubdüse nach Anspruch 2,
**dadurch gekennzeichnet,**
**dass** das Drehsperr-System (33) mindestens eine Rolle (34) mit radial verlaufender Achse aufweist, die an dem Schwenkring (21) sitzt und mit den Seitenwänden einer Öffnung (35) zusammenwirkt, die in dem kugelförmigen Teil (30) ausgeführt ist und eine radial verlaufende Symmetrieebene hat, die die Achse X enthält

4. Schubdüse nach einem der Ansprüche 1 bis 3,
**dadurch gekennzeichnet,**
**dass** der kugelförmige Teil (30) an dem festen Aufbau (13) dergestalt angebracht ist, dass er infolge eines axialen Verschiebens des Schwenkrings (21) unter Einwirkung der zweiten Steuermittel (24) parallel zur Achse X gleiten kann.

5. Schubdüse nach Anspruch 4,
**dadurch gekennzeichnet,**
**dass** der kugelförmige Teil (30) von einer Vielzahl von Tragstegen (40) gehalten wird, die an dem festen Aufbau (13) befestigt sind und sich parallel zur Achse X erstrecken.

6. Schubdüse nach Anspruch 5,
**dadurch gekennzeichnet,**
**dass** der kugelförmige Teil (30) die Tragstege (40) umgibt und eine Vielzahl von Führungsrollen (42) aufweist, die mit Öffnungen (41) in den Tragstegen (40) zusammenwirken.

7. Schubdüse nach einem der Ansprüche 1 bis 6,
**dadurch gekennzeichnet,**
**dass** die zweiten Steuermittel (24) mindestens drei Zylinder umfassen.

8. Schubdüse nach einem der Ansprüche 1 bis 7,
**dadurch gekennzeichnet,**
**dass** die ersten Steuermittel einen Steuerring (7) mit der Achse X beinhalten, der innerhalb des kugelförmigen Teils (30) angeordnet ist und eine Vielzahl von Rollen (10) aufweist, die sich in Anlage an Nocken (11) befinden, welche mit den jeweiligen konvergenten Klappen (3) verbunden sind.

## Claims

1. Axisymmetric convergent-divergent turbojet ejection nozzle comprising, downstream of an ejection duct (1) of axis X, a first circle of convergent flaps (3) hinged at the downstream end of the ejection duct (1) and actuated by first control means (6, 7, 14), and, downstream of the first circle of flaps, a second circle of divergent flaps (15) whose upstream ends (16) are hinged on the downstream ends (17) of the corresponding convergent flaps (3) and whose downstream ends (19) are joined by connecting rods (20) to a pivoting ring (21) interacting with a spherical part (30) secured to a stationary structure (13), the said pivoting ring (21) being actuated by second control means (24) in order to allow a deviation of the jet of ejection gases, **characterized in that** the pivoting ring (21) is mounted so that it can swivel on the external wall of the spherical part (30) in order to guarantee that the said ring is centred around the said spherical part.

2. Nozzle according to Claim 1, **characterized in that** there is additionally provided an anti-rotation system (33) preventing the pivoting ring (21) from rotating about the X axis.

3. Nozzle according to Claim 2, **characterized in that** the anti-rotation system (33) comprises at least one roller (34) of radial axis borne by the pivoting ring (21) and interacting with the lateral walls of a slot (35) made in the spherical part (30) and having a radial plane of symmetry containing the X axis.

4. Nozzle according to any one of Claims 1 to 3, **characterized in that** the spherical part (30) is mounted on the stationary structure (13) so as to be able to slide parallel to the X axis subsequent to an axial movement of the pivoting ring (21) under the action of the second control means (24).

5. Nozzle according to Claim 4, **characterized in that** the spherical part (30) is borne by a plurality of lugs (40) fixed to the stationary structure (13) and extending parallel to the X axis.

6. Nozzle according to Claim 5, **characterised in that** the spherical part (30) surrounds the lugs (40) and comprises a plurality of guide rollers (42) interacting with slots (41) made in the lugs (40).

7. Nozzle according to any one of Claims 1 to 6, **characterized in that** the second control means (24) comprise at least three actuators.

8. Nozzle according to any one of Claims 1 to 7, **characterized in that** the first control means comprise a control ring (7) of axis X arranged inside the spherical part (30) and comprising a plurality of rollers (10) bearing on cams (11) connected respectively to the convergent flaps (3).
